Europäisches Patentamt

European Patent Office

Office européen des brevets

(11) Veröffentlichungsnummer: **0 403 423**

**A2**

## (12) EUROPÄISCHE PATENTANMELDUNG

(21) Anmeldenummer: 90810319.5

(22) Anmeldetag: 20.04.90

(51) Int. Cl.5: **B23G 1/04**

(30) Priorität: 15.06.89 CH 2257/89

(43) Veröffentlichungstag der Anmeldung:
19.12.90 Patentblatt 90/51

(84) Benannte Vertragsstaaten:
CH DE FR GB IT LI

(71) Anmelder: **Suhner Inter-Trade AG**
**Grienbachstrasse**
**CH-6340 Baar(CH)**

(72) Erfinder: **Huerbin, Walter**
**Rebenrain 222**
**CH-5225 Oberbözberg(CH)**

(74) Vertreter: **Gachnang, Hans Rudolf**
**Patentanwalt H.R. Gachnang Badstrasse 5**
**Postfach**
**CH-8501 Frauenfeld(CH)**

(54) **Gewindeschneidevorrichtung.**

(57) Bei der erfindungsgemässen Gewindeschneid-einheit (1) sind die vordere Führungshülse (17) mit der Arbeitsspindel (5) und die hintere Führungshülse (19), welche mittels Druckluft für den Schnellvor-schub verschiebbar im Gehäuse (3) angeordnet ist, durch eine Leitspindel (53) miteinander verbunden.

Die Leitspindel (53) weist zwei Gewindeabschnitte (55,57) mit unterschiedlichen Steigungen auf. Die auf den Gewinden (55,57) kämmenden Leitmuttern (59,61) bewirken eine Steigung des zu schneidenden Gewindes, welche der Differenz der Steigungen der Gewinde (55,57) entspricht.

FIG. 4

EP 0 403 423 A2

## Gewindeschneideinheit mit einem Schnellvorschub und einem Arbeitsvorschub

Gegenstand der vorliegenden Erfindung ist eine Gewindeschneideinheit mit einem Schnellvorschub und einem Arbeitsvorschub gemäss Oberbegriff des Patentanspruches 1.

Gewindeschneideinheiten der genannten Gattung sind bekannt. Bei einer bekannten Gewindeschneideinheit ist die Arbeitsspindel, welche am einen Ende die Werkzeugaufnahme für den Gewindeschneider trägt, in einem Führungsrohr (Pinole) drehbar gelagert. Die Pinole selbst ist innerhalb des Gehäuses der Gewindeschneideinheit axial verschiebbar. Das Ende der Arbeitsspindel ist axial verschiebbar auf der Antriebswelle aufgesteckt und mit dieser drehfest verbunden. Eine Leitmutter, welche einerseits drehfest am Führungsrohr befestigt ist, ist anderseits im Eingriff mit einem Gewinde auf dem antriebsseitigen Ende der Arbeitsspindel.

Durch geeignet angeordnete Kammern kann mittels Druckluft das Führungsrohr für den Schnellvorschub im Gehäuse der Gewindeschneideinheit um den Abstand zwischen Werkstück und Gewindeschneider entsprechenden Betrag vor- bzw. zurückverschoben werden. Der Arbeitsvorschub erfolgt durch relative Verschiebung der Arbeitsspindel zur Pinole infolge Mitnahme der Arbeitsspindel durch das Gewinde an der mit der Pinole verbundenen Leitmutter.

Zum Schneiden von Gewinden mit grosser Steigung ist die bekannte Einheit gut geeignet. Für die Erzeugung von Gewinden, z.B. M1-M6, ergeben sich Probleme bei der Herstellung der Leitmutter und des auf der Gewindespindel aufzubringenden entsprechenden Gegengewindes infolge zu geringer Steigung. Bei einer Steigung von 0,25 für ein M1-Gewinde können auf der Arbeitsspindel bzw. an der Leitmutter, deren Durchmesser beispielsweise 20 mm beträgt ebenfalls nur Gewinde angebracht werden, die diese geringe Steigung aufweisen.

Hier will die Erfindung Abhilfe schaffen. Die Erfindung, wie sie in den Ansprüchen gekennzeichnet ist, löst die Aufgabe, eine Gewindeschneideinheit zu schaffen, welche die Nachteile der bekannten Vorrichtung behebt. Insbesondere ist es die Aufgabe, eine Gewindeschneideinheit zu schaffen, welche auch zum Schneiden von sehr feinen Gewinden geeignet ist.

Es gelingt, durch die Zwischenschaltung einer Leitspindel mit zwei Gewindeabschnitten von unterschiedlicher Steigung feine Gewinde mit kleiner Gewindesteigung dennoch mit kräftig gebauten, mit einer dem Durchmesser der Leitspindel angepassten Gewindeausbildung und eine grosse Lebensdauer aufweisenden Gewindeanordnungen präzise herzustellen.

Es ist insbesondere vorteilhaft, zwei Gewinde zu wählen, die mit geringer Reibung einen dauernden Einsatz in einer automatisierten Produktionsstrasse erlauben. Die Verwendung einer Leithülse ermöglicht hohe Schnittgeschwindigkeiten mit Drehzahlen am Werkzeug von bis 2000 U/min und mehr, welche mit herkömmlichen Vorrichtungen unmöglich sind.

Anhand eines illustrierten Ausführungsbeispieles wird die Erfindung näher erläutert. Es zeigen:

Figur 1 eine schematische Darstellung einer Gewindeschneideinheit mit Motorantrieb,

Figur 2 einen Querschnitt durch eine herkömmliche Gewindeschneideinheit,

Figur 3 einen Querschnitt durch eine Gewindeschneideinheit nach der Erfindung während des Schnellvorschubes und

Figur 4 einen Querschnitt durch die Gewindeschneideinheit bei teilweise vorgeschobenem Gewindeschneider.

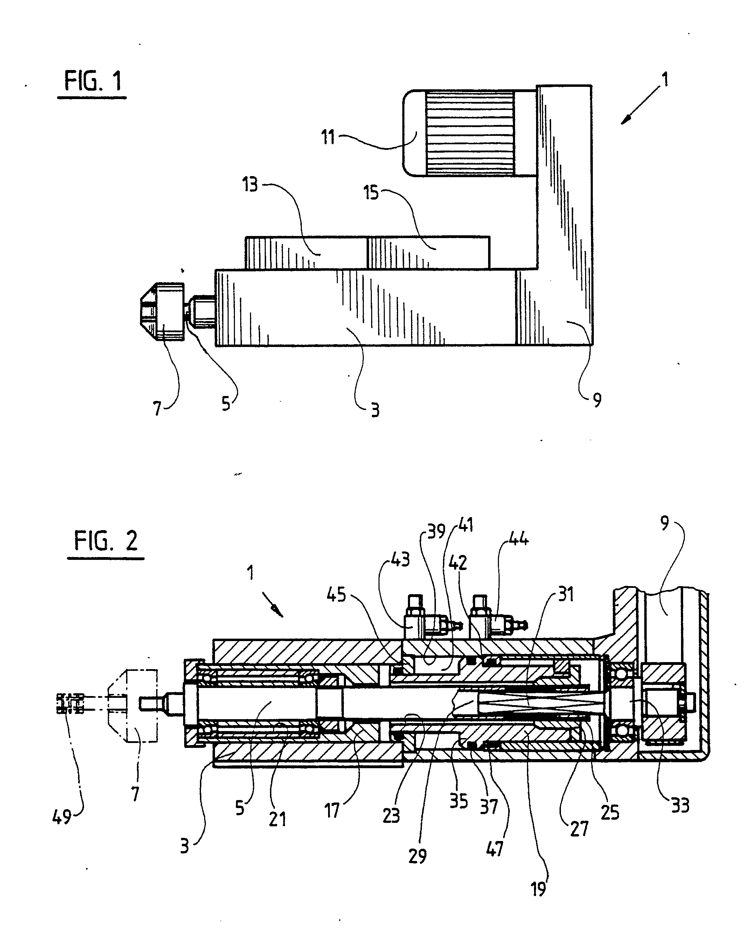

In Figur 1 ist schematisch eine Gewindeschneideinheit 1 dargestellt. Am Gehäuse 3, welches die Arbeitsspindel 5 aufnimmt, ist gegenüber der Werkzeugaufnahme 7 ein Antriebsträger 9 befestigt, welcher im Innern z.B. ein Riemengetriebe mit Wechselrädern aufweist. Ueber dem Gehäuse 3 sitzt am Antriebsträger 9 ein Antriebsmotor 11. Anstelle des Motors 11 und des Antriebsträgers 9 kann am antriebsseitigen Ende des Gehäuses 3 eine flexible Welle (keine Darstellung) angeschlossen sein. Auf dem Gehäuse 3 sind durch zwei Rechtecke die Initiatoren 13, welche den Vorschub überwachen, und die Speisung 15 für den Schnellvorschub angedeutet.

Zum besseren Verständnis der vorliegenden Erfindung wird anhand von Figur 2 vorerst der Aufbau einer herkömmlichen Gewindeschneideinheit kurz erläutert.

Im Gehäuse 3 sind koaxial zueinander ein vorderes Führungsrohr 17 und ein hinteres Führungsrohr 19 axial verschiebbar, jedoch unverdrehbar gelagert. In einer im Innern des vorderen Führungsrohres 17 angebrachten Bohrung 21 ist die Spindel 5 drehbar und axial unverschiebbar gelagert. Das hintere Ende der Spindel 5 ragt in eine Bohrung 23 am Führungsrohr 19 und weist auf dem Mantel ein Gewinde 25 auf, auf dem eine Leitmutter 27 kämmt, welche drehfest mit dem Führungsrohr 19 verbunden ist. Das hintere Ende der Spindel 3 weist eine polygonförmige Bohrung 29 auf, in welche ein entsprechendes Polygon 31 der Abtriebswelle 33 des Antriebsträgers 9 (nur teilweise dargestellt) hineinragt. Am Mantel des Führungsrohres 19 ist ein umlaufender Steg 35 angebracht, dessen Peripherie einen Dichtungsring 37 enthält und in einer Bohrung 39 im Gehäuse 3 anliegt. In die seitlich des Steges 35 gebildeten Ringräume 41,42 münden je eine Druckluftleitung 43 und 44. Die Ringräume 41,42 seitlich des Steges 35 werden durch einen vorderen Anschlag 45 und einen hinteren An schlag 47 axial begrenzt.

Im folgenden wird die Funktionsweise der herkömmlichen Gewindeschneideinheit 1 kurz erläutert. Zum Vorschieben der Arbeitsspindel 5 bis vor die Oberfläche eines Werkstückes (nicht dargestellt) wird durch die hinten liegende Druckluftleitung 44 Druckluft in den hinten liegenden Ringraum 42 eingelassen und damit das hintere Führungsrohr 19 nach links bis zum Anschlag 45 verschoben. Bei dieser Verschiebung wird durch die kraftschlüssige Verbindung des Führungsrohres 19 über die Leitmutter 27, welche auf dem Gewinde 25 am Ende der Spindel 5 sitzt, auch die Spindel 5 mitsamt dem vorderen Führungsrohr 17 nach links verschoben. Wird nun der Antrieb eingeschaltet, dies kann auch vor der Verschiebung mit Druckluft erfolgen, so wird durch das polygonförmige Ende 31 der Abtriebwelle 33 die Spindel 5 in Drehung versetzt und gleichzeitig vom Gewinde 25 nach links verschoben. Das Gewinde 25 weist dabei die gleiche Steigung auf wie ein auf das Werkzeugaufnahme 7 am vorderen Ende der Arbeitsspindel 5 aufgesetzter Gewindeschneider 49 und treibt diesen in das Werkstück.

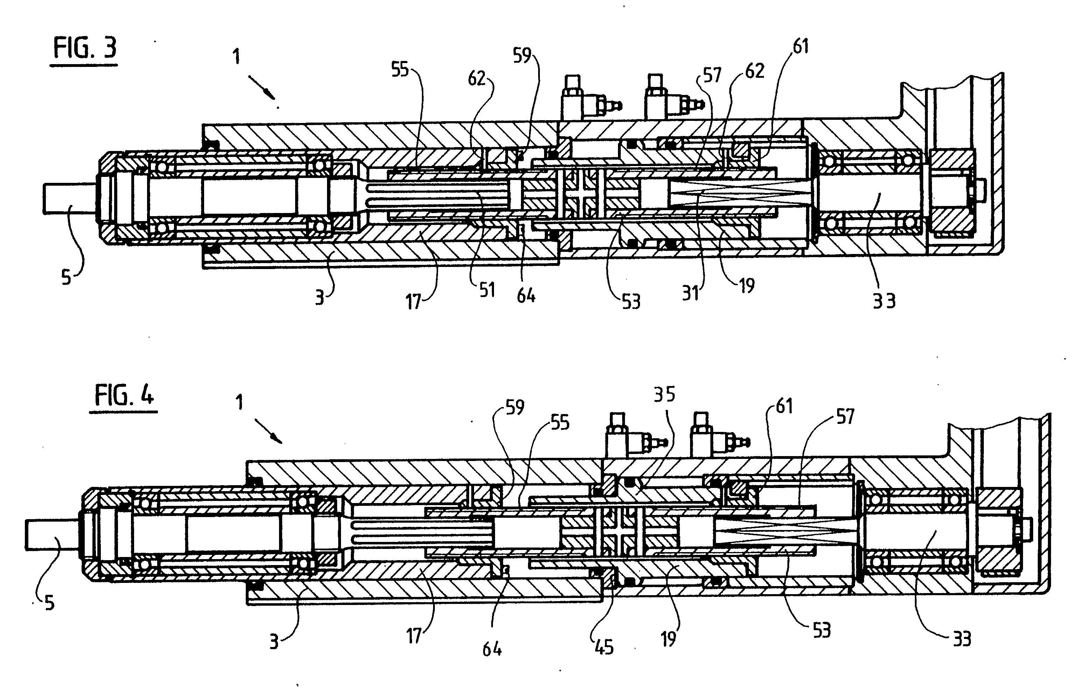

Nachfolgend wird anhand der Figuren 3 und 4 nun die erfindungsgemässe Gewindeschneideinheit 1 beschrieben. Für gleiche Teile werden dieselben Bezugszeichen verwendet, wie in den Figuren 1 und 2.

Die erfindungsgemässe Arbeitsspindel 5 endet innerhalb des vorderen Führungsrohres 17 und ist mit einem polygonförmigen Wellenende 51, ähnlich oder gleich demjenigen der Antriebswelle 31, versehen. Zwischen dem Wellenende 51 und dem abtriebsseitigen Wellenende 31 der Antriebswelle 33 ist eine Leitspindel 53 aufgeschoben. Diese Leitspindel 53 ist an beiden Enden mit je einem Gewinde 55 und 57 versehen, wobei die Gewinde 55,57 gleichläufig ausgebildet sind, jedoch unterschiedliche Steigungen aufweisen.

Auf den Gewinden 55,57 sitzen je eine Leitmutter 59,61, welche verdrehsicher und axial unverschiebbar bezüglich den Führungsrohren 17 bzw. 19 gehalten sind. Als Haltemittel können Schrauben 64 vorgesehen sein. Eine Schmierbohrung 62 gewährleistet einen verschleissarmen Betrieb.

Die Gewindeschneideinheiten gemäss Figuren 2 und 3 befinden sich in zurückgezogener Stellung, d.h. die Arbeitsspindel 5 ist in der am weitesten rechts liegenden Position, wie sie beispielsweise zum Auswechseln des Gewindeschneiders 49 oder beim Werkstückwechsel vorliegt. Die Gewindeschneideinheit 1 befindet sich also in der Stellung, welche zu Beginn des Gewindeschneidvorganges vorliegt.

Im folgenden wird die Funktionsweise der erfindungsgemässen Gewindeschneideinheit naher erläutert. Ausgehend von der Ruhestellung gemäss Figur 3 wird zu Beginn des Gewindeschneidvorganges die Gewindespindel 5 zusammen mit den beiden durch die Leitspindel 53 miteinander gekoppelten Führungsrohre 17 und 19 durch Einblasen von Druckluft durch die Leitung 44 in den Ringraum 42 nach links verschoben, bis der Steg 35 am Anschlag 45 anliegt und in dieser Stellung durch das Luftkissen im Ringraum 42 auch gehalten wird. Gleichzeitig oder nach dem Vorschieben der Führungsrohre 17 und 19 mit der Arbeitsspindel 5 beginnt die Abtriebswelle 33 die Leitspindel 53 zu drehen. Infolge der Verbindung der feststehenden Leitmutter 61 über das Gewinde 57 mit der Leitspindel 53 wird das gesamte Paket, bestehend aus der Leitspindel 53, der Leitmutter 59 und der Führungshülse 17 mit der Arbeitsspindel 5 nach links vorgeschoben. Durch die unterschiedlichen Gewindesteigungen an den Gewinden 55 und 57 wird eine Verminderung der Vorschubbewegung des vorderen Führungsrohres 17 bewirkt. Der Gesamtweg, welchen die Arbeitsspindel 5 und das sie tragende vordere Führungsrohr 17 zurücklegen, ist die Differenz der Wege der beiden Leitmuttern 59 und 61 auf der Leitspindel 53.
Weist beispielsweise die Leitmutter 61 eine Steigung von 1,05 auf und die Leitmutter 59 eine solche von 0,8, so kann mittels zweier "grosser" Steigungen eine "kleine" Steigung von 0,25 erzeugt werden, ohne dass dazu in der Gewindeschneideinheit ein ebenso feines Gewinde vorgesehen werden muss, welches im Dauerbetrieb einem grossem Verschleiss unterworfen wäre.

## Ansprüche

1. Gewindeschneideinheit mit einem Schnellvorschub und einem Arbeitsvorschub für die Arbeitsspindel, bestehend aus einem die Spindel axial und radial lagernden, drehbaren, im Gehäuse verschiebbaren zweiteiligen Führungsrohr, einer mit dem Führungsrohr drehfest verbundenen, mit der Arbeitsspindel im Eingriff stehenden Leitspindel zur Erzeugung eines Arbeitsvorschubes beim Gewindeschneidvorgang und einer Antriebswelle, dadurch gekennzeichnet, dass die Arbeitsspindel (5) und die Antriebswelle (33) durch eine Leitspindel (53) drehfest miteinander verbunden sind, welche Leitspindel (53) auf deren Mantel zwei Gewindeabschnitte (55 und 57) mit unterschiedlichen Steigungen aufweist, auf denen je eine Leitmutter (59 und 61) aufgesetzt ist, wobei die erste Leitmutter (59) mit dem hinteren Führungsrohr (19) und die zweite Leitmutter (61) mit dem vorderen Führungsrohr (17) verbunden ist.

2. Gewindeschneideinheit nach Anspruch 1, dadurch gekennzeichnet, dass die beiden Gewindeabschnitte (55 und 57) je eine zur Steigung des zu schneidenden Gewindes gegenläufige Steigung aufweisen.

3. Gewindeschneideinheit nach Anspruch 2, dadurch gekennzeichnet, dass die Differenz der Steigungen der Gewindeabschnitte (55 und 57) der Steigung des zu schneidenden Gewindes entspricht.

4. Gewindenschneideinheit nach einem der Ansprüche 2 oder 3, dadurch gekennzeichnet, dass die Steigungen der Gewindeabschnitte (55 und 57) grösser sind als die Steigung des zu schneidenden Gewindes betragen.

5. Gewindeschneideinheit nach einem der Ansprüche 1 bis 4, dadurch gekennzeichnet, dass die Gewinde auf den Gewindeabschnitten (55 und 57) der Leitspindel (53) eine deren Durchmesser entsprechende Ausbildung und eine für optimale, dauernde Vor- und Ruckwärtsbewegungen geeignete Auslegung aufweisen.

FIG. 1

FIG. 2

FIG. 3

FIG. 4